# FASCICULE DE BREVET EUROPEEN

(11) **EP 0 518 779 B1**
(45) Date de publication et mention de la délivrance du brevet: **01.05.1996**
(21) Numéro de dépôt: 92401637.1
(22) Date de dépôt: 12.06.1992
(51) Int. Cl.: C09D 175/00, F21Q 1/00, F21V 15/00, C08J 7/04, C08G 18/78, C08G 18/10

(54) **Composition de revêtement destiné à protéger les glaces en matière plastique, plus particulièrement pou les dispositifs d'éclairage et de signalisation de véhicules automobiles ainsi que procédé pour la réalisation d'un tel revêtement**
Zum Schützen von Kunststoff-Glasscheiben, insbesondere für Beleuchtungsvorrichtungen und Signalvorrichtungen von Kraftfahrzeugen geeignete Beschichtungszusammensetzung sowie Verfahren zur Herstellung einer derartigen Beschichtung
Coating composition suitable for the protection of synthetic resin glasses, especially for lighting apparatus and signalling systems of motor vehicles and process for producing such a coating

(30) Priorité: 13.06.1991 FR 9107243
(43) Date de publication de la demande: 16.12.1992
(73) Titulaire: VALEO VISION, F-93012 Bobigny Cédex (FR)
(72) Inventeur: Pilache, Michel, F-95250 Beauchamp (FR); Brassier, Marc, F-94300 Vincennes (FR); Parigot, Jean, F-89100 Saint-Clement (FR)
(74) Mandataire: Lemaire, Marc

(56) Documents cités:
- EP-A- 0 054 491
- FR-A- 2 312 548
- FR-A- 2 320 563
- FR-A- 2 529 559
- FR-A- 2 574 396
- US-A- 4 134 873

## Description

La présente invention a pour objet une composition de revêtement destiné à protéger les glaces en matière plastique, plus particulièrement pour des dispositifs d'éclairage et de signalisation de véhicules automobiles tels que des projecteurs et des feux de signalisation, ainsi qu'un procédé pour la réalisation d'un tel revêtement.

De telles glaces en matière plastique sont en général constituées à partir de polycarbonate ou de polyméthymétacrylate qui présentent d'excellentes caractéristiques de transmission de la lumière, mais qui sont sensibles aux diverses agressions extérieures que peut subir une telle glace en matière plastique.

Ces agressions extérieures sont de plusieurs types.

Il s'agit d'agressions mécaniques résultant de la collision de la glace avec différentes particules solides ou liquides, ainsi que le frottement de dispositifs d'essuyage de vitres.

Il en résulte une abrasion de la glace plastique qui entraîne une dégradation des qualités de transmission de la lumière de la glace, ainsi que la création de diffractions parasites.

Il s'agit aussi d'agressions chimiques dues à différents facteurs susceptibles de provoquer des réactions chimiques avec la matière constituant ladite glace. De telles réactions chimiques peuvent être provoquées par l'humidité ambiante, par diverses pollutions atmosphériques, par les liquides de lavage, ainsi que par des projections d'huile ou de carburant.

Des transformations chimiques du matériau de la glace plastique peuvent également être initiées sous l'effet de l'exposition à certains rayonnements tels que les rayons ultraviolets.

Ces réactions chimiques ont pour conséquence d'entraîner des modifications de l'aspect de la glace et également une dégradation de ses facultés de transmission de la lumière.

Pour éviter les inconvénients ci-dessus, on a déjà proposé de protéger les glaces plastiques au moyen d'un revêtement protecteur.

Les revêtements protecteurs peuvent être classés en deux catégories selon la manière dont ils agissent.

La première catégorie est constituée par des vernis durs, résistant à l'abrasion, et formant un écran transparent protégeant la glace plastique contre toutes agressions mécaniques et chimiques.

Les vernis de cette catégorie sont en général formés à partir de composés silico-organiques, dont la résistance à l'abrasion et aux agressions chimiques se rapprochent de celle du verre.

Ces vernis ont cependant l'inconvénient de présenter un coefficient de dilatation différent de celui de la glace plastique qu'ils protègent, si bien qu'il est nécessaire de prévoir entre le vernis et la glace plastique, une couche intermédiaire susceptible d'absorber les tensions mécaniques pouvant se produire lors de variations de température, comme c'est le cas pour les glaces des projecteurs de véhicules automobiles.

L'application et la réalisation de ces vernis est donc complexe et onéreuse, c'est pourquoi dans certaines applications on peut préférer des vernis d'une deuxième catégorie.

Cette deuxième catégorie est formée par les vernis dits auto-cicatrisants qui présentent la caractéristique de reformer d'eux-mêmes une surface parfaite après agression mécanique telle que rayure.

La composition de revêtement, objet de la présente invention, appartient à cette deuxième catégorie, celle des vernis auto-cicatrisants.

Les revêtements protecteurs formant vernis auto-cicatrisants sont en général formés à partir de compositions à base de polyuréthane.

C'est le cas du revêtement décrit dans la demande de brevet FR-A-2 529 559, qui décrit une composition de revêtement formée d'un polyuréthane réticulé obtenu par action d'un agent réticulant trifonctionnel sur un prépolymère.

Mais il est apparu qu'une telle composition qui se présente sous la forme d'un réseau large, pouvait présenter des caractéristiques de résistance mécanique et/ou chimique insuffisantes dans les applications telles que la protection des glaces plastiques de projecteurs de véhicules automobiles.

On a également proposé, dans la demande de brevet FR-A-2 366 321, pour fabriquer un verre de sécurité stratifié, une composition de polyuréthane-polyurée de structure essentiellement linéaire, obtenue par réaction d'un excès de de diisocyanates organiques sur des dihydroxypolyesters ou des dihydroxypolyethers. Mais, pour les applications précitées, il s'est avéré que la résistance mécanique et chimique était insuffisante.

La présente invention a donc pour objet une composition de revêtement destinée à protéger, plus efficacement que les compositions connues, les glaces en matière plastique, plus particulièrement pour les dispositifs d'éclairage et de signalisation des véhicules automobiles.

La composition de ce revêtement, selon l'invention, est caractérisée en ce qu'elle comprend un polyuréthane-polyurée réticulé obtenu par action d'un excès de triisocyanate sur un polyesterpolyol et/ou sur un polyétherpolyol et action de l'humidité de l'air.

Avantageusement, le rapport du nombre de groupements NCO du triisocyanate sur le nombre de groupements OH du polyesterpolyol ou du polyétherpolyol soit compris entre 1,01 et 1,40, et de préférence entre 1,10 et 1,30.

On a pu constater que la composition de revêtement selon l'invention permettait d'améliorer sensiblement la résistance d'une glace plastique protégée par cette composition, à l'égard de différents facteurs chimiques tels que solvants, atmosphère industriel, tout en présentant de bonnes caractéristiques de résistance et de protection vis-à-vis des abrasions ainsi que contre un jaunissement dans le temps sous l'effet de rayonnements ultraviolets.

La composition de revêtement, selon l'invention, présente l'avantage par rapport aux compositions de revêtements de l'art antérieur, de ne pas nécessiter, pour son élaboration, l'emploi de composés dangereux à manipuler comme les diisocyanates.

Selon d'autres caractéristiques de l'invention, la composition de revêtement comprend deux agents stabilisants agissant en synergie, à la fois pour la protection du revêtement durcissant et de la glace plastique elle-même contre le rayonnement ultraviolet et contre l'oxydation.

La protection de la composition de revêtement elle-même est avantageusement obtenue par l'adddition à ladite composition d'une amine à encombrement stérique. Une amine à encombrement stérique convenant particulièrement bien est commercialisée par la société CIBA-GEIGY sous la dénomination commerciale "TINUVIN 292".

L'adjonction de benzotriazole ou d'un de ses dérivés dans la composition de revêtement permet d'assurer, en synergie avec l'amine à encombrement stérique, la protection de la matière de la glace plastique proprement dite.

On peut avantageusement utiliser un benzotriazole commercialisé par la société CIBA-GEIGY sous la référence commerciale "TINUVIN 1130".

Un catalyseur est avantageusement utilisé pour faciliter et accélérer la réaction chimique de formation du polyuréthane-polyurée réticulé, ainsi que pour permettre une réticulation homogène. De préférence, il s'agit d'un sel d'étain et plus particulièrement du dibutyldilaurate d'étain, tel que celui commercialisé par la société AKZO sous la référence "STANCLERE TL".

De manière à faciliter l'application sur la glace plastique des différents éléments destinés à former ladite composition de revêtement, on utilise comme solvant un mélange d'acétate d'éthyle, de méthyl-isobutylcétone, et de xylènes.

On prévoit également, avantageusement, l'incorporation d'un agent d'étalement destiné à assurer une application uniforme et sans formation de bulles, de la composition de revêtement.

Un tel agent d'étalement est de préférence constitué par une huile de silicone à bas poids moléculaire, comme par exemple celle qui est commercialisée par la société RHONE POULENC sous la référence "RHODORSIL Rh640 V100".

D'autres caractéristiques et avantages de l'invention apparaîtront ci-après dans la description d'exemples de réalisation de compositions de revêtements destinés à protéger des glaces plastiques.

Un pré-mélange des différents constituants , à l'exception du triisocyanate, est réalisé dans les proportions indiquées dans le tableau ci-après, dans une cuve sous agitation. Le triisocyanate est ajouté en continu au mélange liquide, juste avant application de celui-ci.

En variante, le mélange ainsi constitué est conservé à basse température, jusqu'à application.

L'application du mélange est effectuée, par pulvérisation, sur une glace plastique en polycarbonate préalablement déionisée.

L'ensemble formé par la glace plastique ainsi revêtue est ensuite maintenu pendant 5 minutes à température ambiante afin d'assurer le départ par évaporation d'une quantité importante de solvant et obtenir un tendu de surface suffisant.

Après cela l'ensemble est introduit dans une étuve pour être chauffé à une température de 110 à 120°C, pendant une heure, ce qui a pour effet de conduire à la formation d'un polyuréthane réticulé.

En variante, au lieu d'être placé dans une étuve, l'ensemble est soumis à un rayonnement infra-rouge.

Après sortie de l'étuve ou après exposition au rayonnement infrarouge, la glace plastique se trouve revêtue d'une couche à base de polyuréthane réticulé.

Dans les exemples 1 à 6 ci-après où les proportions relatives de polyesterpolyol et triisocyanate correspondent au rapport stoechiométrique de la réaction de formation du polyuréthane (rapport NCO/OH = 1), aucune transformation chimique ultérieure n'est opérée.

Dans les exemples 7 et 8 ci-après où le triisocyanate est prévu, selon l'invention, en excès par rapport au polyesterpolyol et/ou au polyétherpolyol, et vis-à-vis des conditions stoechiométriques de la réaction de formation de polyuréthane réticulé.

Dans ces deux derniers exemples, conformément à l'invention, les ensembles formés par les glaces revêtues sont laissées pendant une durée de 24 à 48 heures à l'action d'un air ambiant chargé d'humidité.

Il en résulte que, par hydrolyse, les terminaisons isocyanate libres se transforment en fonctions urée.

Le revêtement de la glace plastique est alors formé principalement d'un polyuréthane-polyurée réticulé.

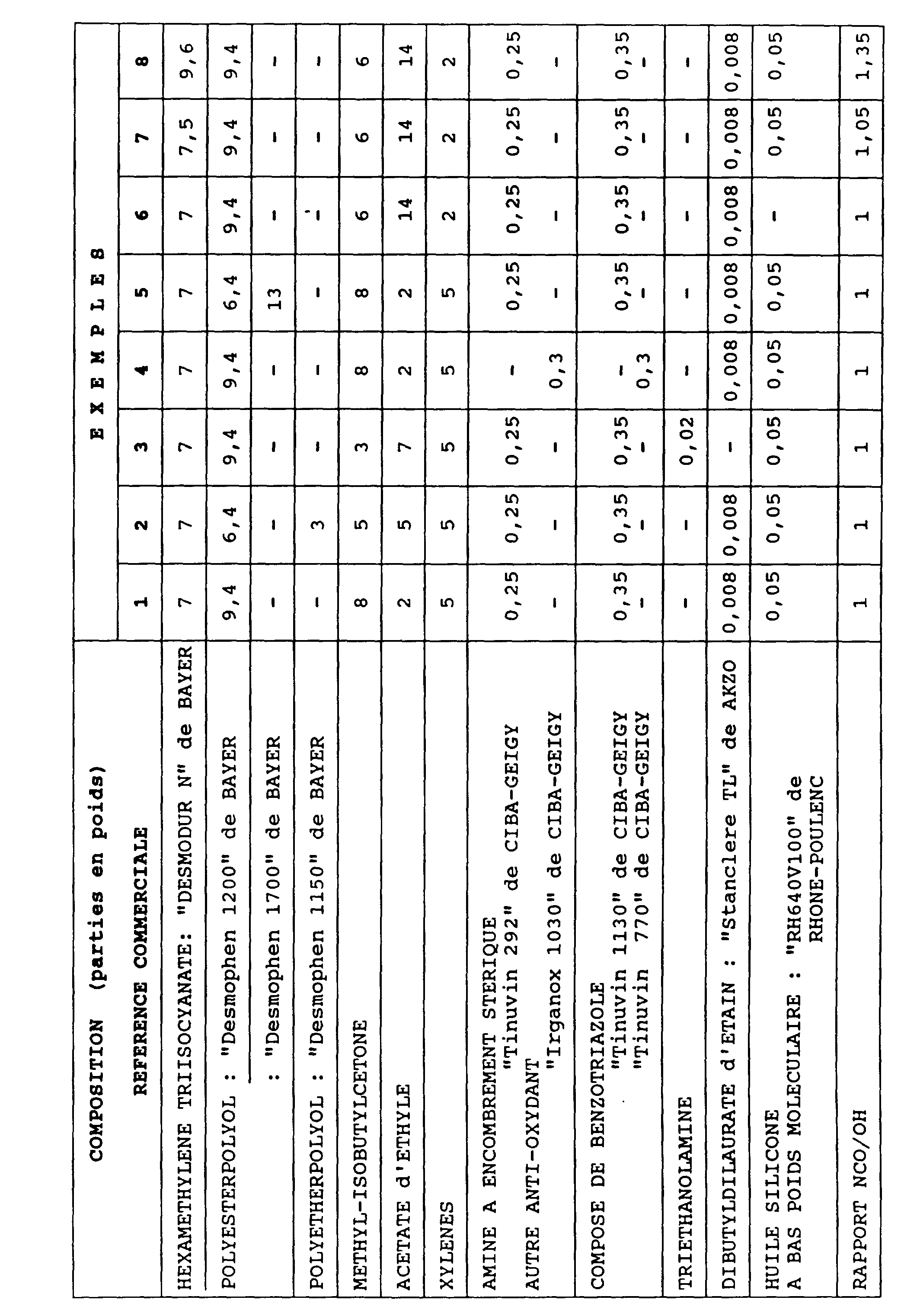

Les constatations suivantes ont pu être effectuées.

On a remarqué que l'échantillon réalisé conformément à l'exemple 1 présentait des traces laiteuses après avoir séjourné en atmosphère industriel.

Les échantillons réalisés selon les exemples 2 et 3 sont rapidement sujets à un jaunissement. Sur l'échantillon réalisé selon l'exemple 3, on a en outre pu constater une perte d'adhérence du revêtement protecteur sur la glace.

L'échantillon réalisé selon l'exemple 4 présente une dureté superficielle trop faible pour l'application considérée.

L'échantillon réalisé selon l'exemple 5 ne résiste pas correctement à l'action de différents solvants.

L'échantillon réalisé suivant l'exemple 6 présente des défauts dans le revêtement protecteur tel que cratères ou microbulles.

On a par contre pu mettre en évidence que les échantillons réalisés selon les exemples 7 et 8 présentent tous deux une bonne tenue à l'abrasion, une absence de jaunissement après exposition à une lumière solaire intense, une bonne tenue au test de Kesternick, ainsi qu'à l'exposition en atmosphère industriel.

Ceci confirme l'intérêt des dispositions selon l'invention.

## Revendications

1. Composition de revêtement destinée à protéger, les glaces en matière plastique, plus particulièrement pour les dispositifs d'éclairage et de signalisation des véhicules automobiles, caractérisée en ce qu'elle comprend un polyuréthane-polyurée réticulé obtenu par action d'un excès de triisocyanate sur un polyesterpolyol et/ou sur un polyétherpolyol et action de l'humidité de l'air.

2. Composition selon la revendication 1, caractérisée en ce que ledit excès de triisocyanate est tel que le rapport du nombre de groupements NCO du triisocyanate sur le nombre de groupement OH du polyesterpolyol et/ou du polyétherpolyol est compris entre 1,01 et 1,40.

3. Composition selon la revendication 2, caractérisé en ce que le ledit rapport du nombre de groupements NCO sur le nombre de groupements OH est compris entre 1,10 et 1,30.

4. Composition selon l'une quelconque des revendications précédentes, caractérisée en ce qu'elle comprend une amine à encombrement stérique et du benzotriazole ou l'un de ses dérivés.

5. Composition selon la revendication 4, caractérisée en ce qu'elle comprend du dibutyldilaurate d'étain.

6. Procédé pour la réalisation d'un revêtement dont la composition est conforme à l'une quelconque des revendications précédentes, caractérisé par les phases suivantes :
- un pré-mélange des différents constituants à l'exception du triisocyanate, est réalisé ;
- le triisocyanate est ajouté au dit pré-mélange ;
- le mélange ainsi constitué est soit aussitôt appliqué sur une glace plastique, soit conservé à basse température jusqu'à application sur une glace plastique ;
- l'ensemble formé par la glace plastique ainsi revêtue est maintenu à température ambiante jusqu'à évaporation d'une quantité importante de solvant ;
- ledit ensemble est ensuite chauffé dans une étuve ou sous l'effet d'un rayonnement infra-rouge ;
- ledit ensemble est soumis à l'action d'un air ambiant chargé d'humidité.

## Patentansprüche

1. Zum Schützen von Kunststoff-Glasscheiben, insbesondere für Beleuchtungsvorrichtungen und Signalvorrichtungen von Kraftfahrzeugen geeignete Beschichtungszusammensetzung, **dadurch gekennzeichnet** , daß sie ein vernetztes Polyharnstoff-Polyurethan enthält, das durch Einwirkung eines Überschusses von Triisocyanat auf ein Polyesterpolyol und/oder auf ein Polyetherpolyol und durch Einwirkung der Luftfeuchtigkeit gewonnen wird.

2. Zusammensetzung nach Anspruch 1 , **dadurch gekennzeichnet** , daß der besagte Überschuß von Triisocyanat so bemessen ist, daß das Verhältnis der Anzahl der NCO-Gruppen des Triisocyanats bezogen auf die Anzahl der OH-Gruppen des Polyesterpolyols und/oder des Polyetherpolyols zwischen 1,01 und 1,40 liegt.

3. Zusammensetzung nach Anspruch 2 , **dadurch gekennzeichnet** , daß das besagte Verhältnis der Anzahl der NCO-Gruppen bezogen auf die Anzahl der OH-Gruppen zwischen 1,10 und 1,30 liegt.

4. Zusammensetzung nach einem der vorangehenden Ansprüche, **dadurch gekennzeichnet**, daß sie ein sterisch wirkendes Amin und Benzotriazol oder eines seiner Derivate enthält.

5. Zusammensetzung nach Anspruch 4 , **dadurch gekennzeichnet** , daß sie Zinndibutyldilaurat enthält.

6. Verfahren zur Herstellung einer Beschichtung, deren Zusammensetzung einem der vorangehenden Ansprüche entspricht , **dadurch gekennzeichnet**, daß es die folgenden Arbeitsgänge umfaßt:
- es wird eine Vormischung der verschiedenen Bestandteile mit Ausnahme des Triisocyanats hergestellt;
- das Triisocyanat wird der besagten Vormischung zugesetzt;
- die so gebildete Mischung wird entweder umgehend auf einer Kunststoff-Glasscheibe aufgetragen oder bis zur Auftragung auf einer Kunststoff-Glasscheibe bei niedriger Temperatur aufbewahrt;
- die Gesamteinheit, die aus der Kunststoff-Glasscheibe mit der so aufgetragenen Beschichtung besteht, wird bis zur Verdampfung einer größeren Menge Lösungsmittel bei Raumtemperatur belassen;
- danach wird die besagte Gesamteinheit in einem Trockenofen oder durch Infrarotbestrahlung erhitzt;
- die besagte Gesamteinheit wird der Einwirkung einer feuchtigkeitshaltigen Umgebungsluft ausgesetzt.

## Claims

1. A coating composition for protecting glasses of plastics material, more particularly for lighting and signalling devices for motor vehicles, characterised in that it comprises reticulated polyurethane-polyurea, obtained by the action of an excess of triisocyanate on a polyesterpolyol and/or on a polyetherpolyol, and by action of atmospheric humidity.

2. A composition according to Claim 1, characterised in that the said excess of triisocyanate is such that the ratio of the number of NCO groups in the triisocyanate to the number of OH groups in the polyesterpolyol and/or in the polyetherpolyol is in the range between 1.01 and 1.40.

3. A composition according to Claim 2, characterised in that the said ratio of the number of NCO groups to the number of OH groups is in the range between 1.10 and 1.30.

4. A composition according to any one of the preceding Claims, characterised in that it includes a steric hindrance amine and benzotriazole or one of its derivatives.

5. A composition according to Claim 4, characterised in that it includes tin dibutyldilaurate.

6. A method for making a coating, the composition of which is in accordance with any one of the preceding Claims, characterised by the following steps:
- a preliminary mixture is made of the various constituents, except for triisocyanate;
- the triisocyanate is added to the said preliminary mixture;
- the mixture thus constituted is either immediately applied on a plastics glass, or kept at low temperature until it is applied on a plastics glass;
- the assembly consisting of the plastics glass so coated is kept at ambient temperature until a major quantity of solvent has evaporated;
- the said assembly is then heated in an autoclave or by infrared radiation;
- the said assembly is subjected to the action of humid ambient air.
